# EUROPEAN PATENT SPECIFICATION

(11) **EP 1 115 527 B1**
(45) Date of publication and mention of the grant of the patent: **14.09.2005**
(21) Application number: 98901893.2
(22) Date of filing: 13.02.1998
(51) Int. Cl.: B23D 53/08, B23D 55/04, B23B 31/00

(54) **METHOD AND MACHINE FOR CUTTING BARS OR TUBES**
VERFAHREN UND MASCHINE ZUM SCHNEIDEN VON STANGEN ODER ROHREN
PROCEDE ET MACHINE PERMETTANT DE COUPER DES BARRES ET DES TUBES

(43) Date of publication of application: 18.07.2001
(73) Proprietor: Nachev, Valentin Rashev, 1421 Sofia (BG)
(72) Inventor: Nachev, Valentin Rashev, 1421 Sofia (BG)
(74) Representative: Neykov, Neyko Hristov
(86) International application number: PCT/BG1998/000005
(87) International publication number: WO 1999/041033

(56) References cited:
- DE-A- 1 477 911
- GB-A- 512 117
- GB-A- 2 026 384
- GB-A- 2 070 489
- US-A- 4 428 520
- US-A- 5 341 712

## Description

### 1. TECHNICAL FIELD OF THE INVENTION

The invention disclosed herein refers to a method and a machine for cutting bar stock which are applicable in cutting blanks prepared from solid or hollow bar stocks of different length.

### II. BACKGROUND OF THE INVENTION

Apparatus and method for cutting tubular or cylindrical workpieces are known, which are revealed in patent document GB 2 026384 A. According to the description the method for cutting tubular or cylindrical workpieces is carried out in the following sequence of operations:

The material to be cut is placed on supporting means and the band saw head is longitudinally adjusted for ensuring the exact position of the workpiece to be cut. Then the cutting band saw and the drive rollers fix the workpiece, and the band saw device by progressive motion is directed to the workpiece already tightened to the carrier rollers. The immovably fixed workpiece is then cut to a predetermined distance of penetration only during the progressive motion of the band saw. In case of a solid bar to be cut the distance of penetration is equal to the cross-section radius, and in case of a tubular workpiece to cut - equal to its wall thickness.

After cutting to the above determined distance the progressive motion of the band saw is ceased and the workpiece is rotated by the drive wheels in the same direction as the direction of movement of the band saw. The remaining part of the section of the workpiece is cut as a result of the rotation of the workpiece, since the distance of penetration is preliminary determined to the above cited values.

After finishing the process the band saw returns to its initial position.

The above described method is carried out by means of apparatus for cutting through elongate tubular or cylindrical workpieces, comprising a machine frame, support means mounted to said frame to support the workpiece to be cut and drive means to rotate the workpiece on the support means during cutting operation. Further the apparatus comprises a band saw having a certain operative zone (run zone) perpendicular to the workpiece to be cut.

The band saw is mounted on the frame so as to allow the pivotal movement during cutting of the workpiece. Means for sensing and signalling a pre-determined end position of the band saw during cutting operation are mounted on the frame. Means is also provided for sensing the distance of penetration of the band saw, where after reaching a predetermined depth a signal is produced for rotation of the workpiece.

### SUMMARY OF THE INVENTION

Taking into account the prior state of the art, the main object of the invention is to provide a method and a machine for cutting bar stocks and pipes by means of a band saw in order to achieve a greater productivity and a lower cost of the process of cutting at increased efficiency of operation of the band saw, where the process of cutting is performed at a minimal constant number of cutting teeth not depending on the diameter of the section and the depth of the section and at improved geometrical preciseness of the surfaces to be cut.

The object of the invention is achieved by the method defined in claim 1 and the machine defined in claim 3, respectively.

An advantage of the invention is the reduction of material consumption since the automatic optimisation of the process of cutting makes it possible to use a thinner band saw and ensures its longer life of operation. The invention also provides considerable decreasing of noise and pollution, as well as reducing the reject and accidents among personnel.

The invention finds application in cutting bar stocks of different diameters and length.
The preferred embodiment of the method for cutting bar stock is presented with the drawings enclosed herein as follows:

### Brief description of the Drawings

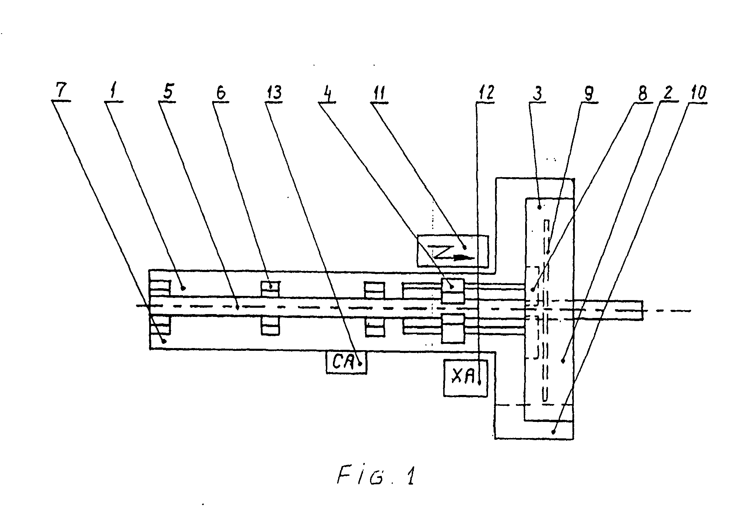

Fig.1 - Top plan view of the machine

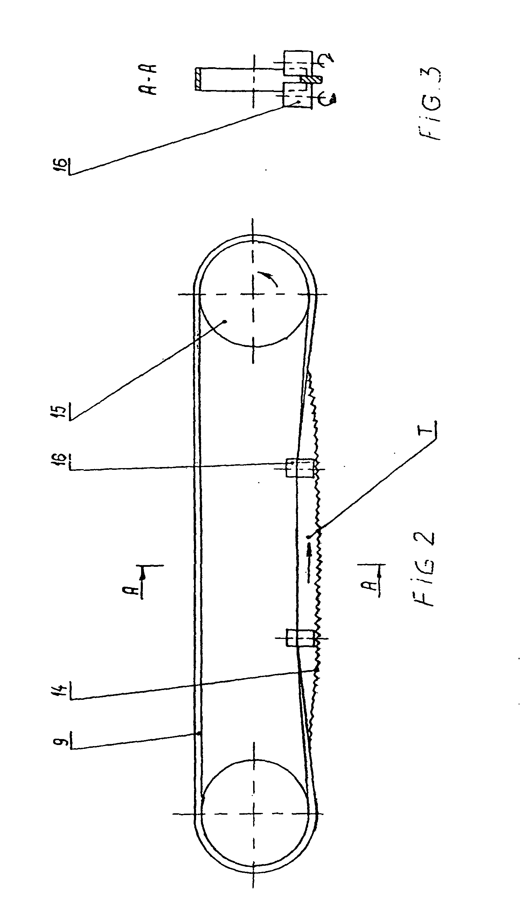

Fig.2 - Side view of the endless band saw
Fig.3 - Cross-sectional view taken along the line A-A of Fig.1

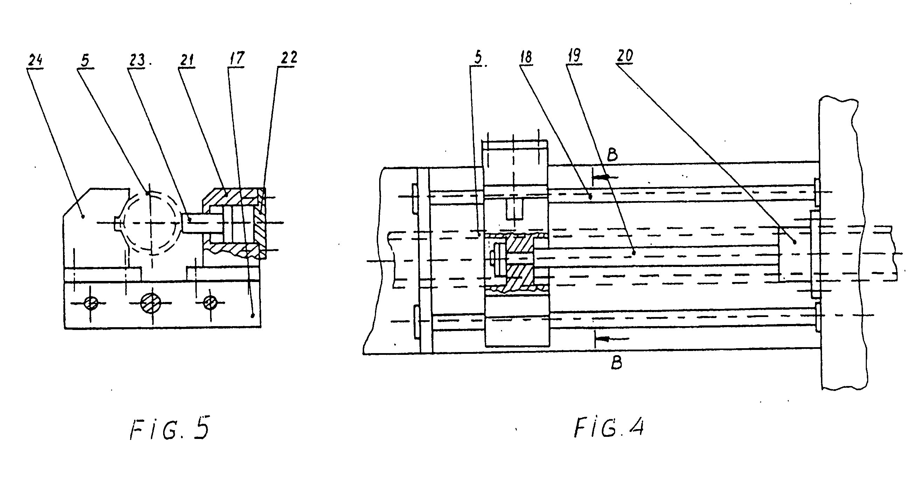

Fig.4 - Top plan view of the feeder
Fig.5 - Cross-sectional view taken along the line B-B of Fig.4

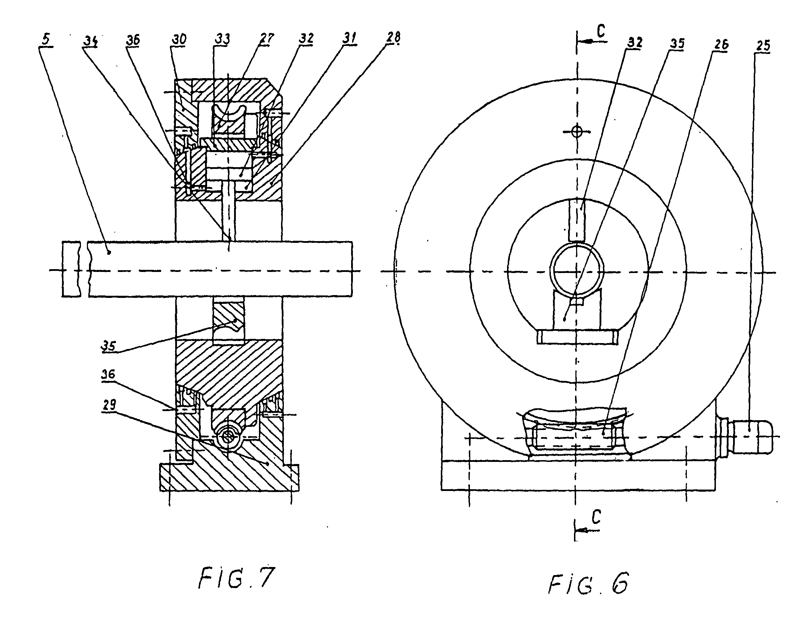

Fig.6 - Top plan view of the rotary clamping device
Fig. 7 - Cross-sectional view taken along the line C-C of Fig.6

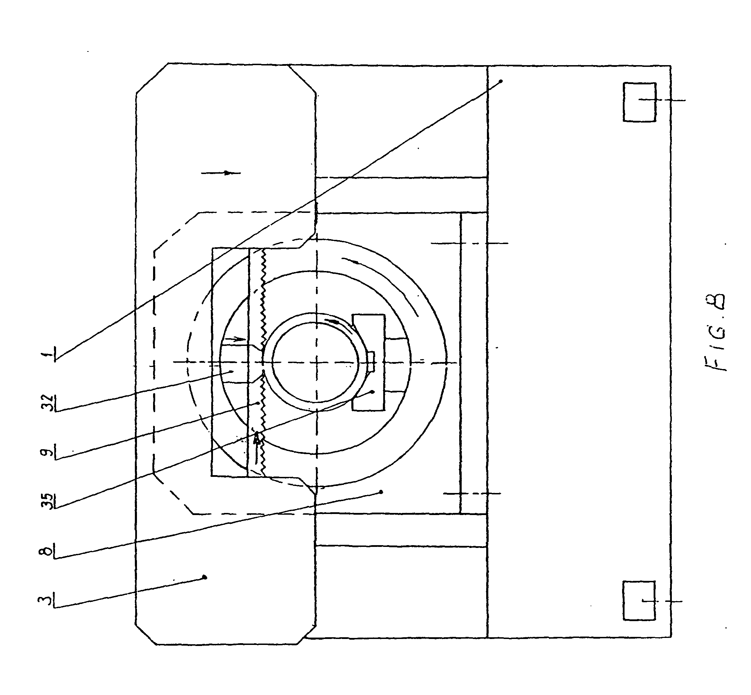

Fig.8 - Top plan view of the band saw and the rotary clamping device with the bar stock being cut

### DESCRIPTION OF THE PREFERRED EMBODIMENTS

Further in the description an embodiment of the method for cutting bar stock in accordance with the invention will be described which can be used for cutting hollow or solid bar stock, as well as for other materials such as concrete pipes, stoneware pipes, etc.

The method for cutting bar stock is implemented in the following sequence: the bar stock to be cut is placed upon supporting rollers and is moved for setting up in the rotary clamping device. Then the bar stock to be cut is rotated after fixing simultaneously with setting of the cutting mechanism in linear progressive motion and feeding it towards the outer surface of the bar stock. The cutting is performed with variable number of revolutions with feeding the cutter along a spiral path, and continues at most to a depth equal to 1/2 of the diameter of the bar stock. When cutting hollow bar stock is to be done cutting continues to a depth equal to the thickness of the pipe wall.

The method described heretofore can be performed by a machine in accordance with the invention, the machine consisting of T-shaped main body(1), at the front end (2) of which a bearing frame (3) is disposed. A step feeder (4) is secured on the main body (1) and engages the bar stock to be cut(5), which in turn is set up along the longitudinal axis of the main body(1) on supporting rollers(6). A cutting mechanism (9) with an endless band saw(14) is mounted on the bearing frame(3), the rotary clamping device(8) being disposed between the band saw (14) and the feeder (4). A cooling system(10) is installed at the front end(2) of the main body (1) and on both sides of the main body (1) an electric(11) and a hydraulic(12) systems are mounted, and a lubricating system is disposed near them.

According to a preferred embodiment the cutter is accomplished as an endless band saw (14) stretched between the outer surfaces of two stretching rollers(15),and its working T-section being vertically oriented by means of two pairs of twisting rollers(16) mounted on the bearing frame(3).

The feeder(4), preferably a step feeder, is mounted on the prolonged part of the main body(1). It consists of a mobile carriage (17) placed upon cylindrical guides (18) and is fixed detachably to the piston bar (19) of a feeding hydraulic cylinder (20). There is a supporting hydraulic cylinder (21) with a lid (22) immovably secured to the carriage(17). The front end of the piston bar (23) of the supporting hydraulic cylinder(21) partially engages the bar stock to be cut, while the fixed carrier (24), mounted on the carriage (17), partially engages the opposite end of the bar stock(5), and can be changed depending on the diameter of the bar stock or the pressing leg placed right upon the surface of the pipe to be cut.

A rotary clamping device (8) is disposed between the band saw (14) and the feeder (4) and consists of an engine(25), preferably a DC engine, connected with a worm(26), the worm-wheel (27) being stuck immovably on a carrier (28), which in turn is secured with bearings to the carrier body (29) of the rotary clamping device (8) and to a cover (30), which is immovably fixed on the carrier body(29). A second supporting hydraulic cylinder (31) is mounted on the carrier (28) with a piston bar (32) partially engaging the outer surface of the bar stock(5) to be cut with its front end(34). There is a second fixed bearing (35) diametrically opposing said front end and leg(34). According to another embodiment of the machine the bearing (35) is movable. There is a covering lid (33) on the carrier (28) and pass grooves (36) through the cover (30), the carrier (28) and the carrier body (29).

### OPERATION OF THE INVENTION

The machine for cutting bar stock operates according to the sequence of procedures of the method described heretofore. The bar stock(5) to be processed, a pipe for example, is set up on the supporting rollers (6) and then automatically caught by the step feeder (4) by means of the first fixed bearing (24) and the supporting piston bar (23) of the supporting hydraulic cylinder (21). The mobile carriage (17) is then moved along the cylindrical guides (18) by the piston bar (19) of the feeding hydraulic cylinder (20). Being set up in this way, the pipe(5) is moved to the zone of the rotary clamping device (8), released from the feeder(4) and rotated with 5 to 50 rev/min by a DC engine (25), a worm (26) and a worm-wheel (27). The endless band saw (14) is simultaneously set in motion and fed towards the outer surface of the pipe(5), the cutting being performed with variable revolutions and feeding of the cutter along a spiral path until the pipe(5) is cut. Meanwhile the feeder(4) is back in its starting position, and so is the band saw (9) after the pipe(5) is cut. Further the pipe(5) is moved forward again by the feeder (4) and fed to the rotary clamping device (8),clamped, rotated and cut, the cycle being repeated until the pipe is cut to the necessary number of blanks.

It is to be understood that the present invention is not limited to the embodiment described above, but encompasses any and all embodiments within the scope of the claims to come hereinafter.

### List of symbols

- 1: - main body
- 2 -: front end of the main body
- 3 -: bearing frame

- 4 -: step feeder
- 5 -: bar stock

- 6 -: supporting rollers
- 7 -: back end of the main body
- 8 -: rotary clamping device
- 9 -: cutting mechanism
- 10 -: cooling system
- 11 -: electrical system
- 12 -: hydraulic system
- 13 -: lubricating system
- 14 -: endless band saw

- 15 -: stretching rollers

- 16 -: twisting rollers
- 17 -: mobile carriage
- 18 -: cylindrical guides

- 19 -: first piston bar
- 20 -: first hydraulic cylinder
- 21 -: first supporting hydraulic cylinder
- 22 -: cylinder's lid
- 23 -: piston bar of 1st supporting
- cylinder
- 24 -: first fixed bearing
- 25 -: DC engine
- 26 -: worm
- 27 -: worm - wheel
- 28 -: carrier
- 29 -: carrier body
- 30 -: cover
- 31 -: second supporting cylinder
- 32 -: piston bar of 2nd supporting cylinder
- 33 -: covering lid

- 34 -: outer end of second piston bar
- 35 -: second fixed bearing
- 36: - pass grooves

## Claims

1. A method for cutting bar stocks and tubes with band saw consisting of setting, fixing and rotating the material to be cut, driving the band saw in motion, feeding it towards the material to be cut and cutting the material, **characterized in that** after the material to be cut is fixed, the cutting of its whole section is fulfilled by a simultaneous action of its three working movements, which are the own linear motion of the band saw, the feeding motion of band saw and the turning motion of the bar stock or the tube to be cut, while the cutting the whole section is finished with its cutting to a depth equal to ½ its diameter for the compact material and to a depth equal to the thickness of the wall for the tube.

2. A method for cutting according claim 1, **characterized in that** the cutting of the whole section is fulfilled through continuously variable values of the speeds of the feeding motion of the band saw and the turning motion of the work pieces.

3. A machine for cutting bar stock and tubes using the method according to claim 1 and 2, consisting of a main body, the bar stock to be cut being fixed on the supporting rollers mounted upon the main body and a mobile cutting mechanism with the mounted in it cutting band is foreseen at the front end of the main body, **characterized in that** at the front, length-oriented part of the main body (1) a feeder(4) is mounted and at the transverse oriented part of the T- shaped main body (1), a rotary-clamping device (8) is disposed, consisting of DC engine(25), connected to a worm (26) and a worm-wheel (27) immovably secured to a carrier (28), which is secured to a carrier body (29) and a cover (30) and there is a second supporting hydraulic cylinder (31) in said carrier (28), its supporting piston-bar (32) lying on one end of the bar stock (5), the opposite end of which lies on a second bearing (35) mounted on the carrier (28), whereupon said feeder (4) is a step feeder and consists of a mobile carriage (17) disposed on cylindrical guides (18) and connected to a feeding hydraulic cylinder (20), upon the mobile carriage (17) a piston bar (19) of the supporting hydraulic cylinder (21) is situated, making contact with the bar stock (5) and immovable support, mounted upon the mobile carriage (17) and the cutting band saw (14) is disposed between two stretching rollers (11)and positioned vertically in the area of its working T- section by means of two pairs of twisting rollers (16) mounted on the bearing frame (3) and that the machine is automatically controlled for carrying our the three working movements simultaneously.

## Patentansprüche

1. Schneidverfahren von Stangenmaterial und Rohre das, Stellung, Festlegung und Drehung des zu schneidenden Materials, Bewegung der Saege und ihre Speisung gegenuber des zu schneidenden Materials umfasst, **dadurchgekennzeichnet dass,** nach der Festlegung des zu schneidenden Materials das Schneiden des ganzen Schnitt, bei gleichzeitiger Handlung von drei Arbeitsbewegungen bzw lineare Bevegung der Saege, Speisebewegung der Saege und Drehbevegung des zu schneidenden Materials, durchgefuehrt ist und das Schneiden solsnge eine Tiefe des Schnitts gleich des Radiusses des Stangenmaterials oder der Breite der Rohrband erreicht ist, fortgezetzt wird.

2. Schneidverfahren von Stangenmaterial und Rohre nach Anspruch 1, **dadurchgekennzeichnet dass,** das Schneiden des ganzen Schnitts bei wechselten Werten der Geschwindigkeiten der Speisebewegung der Saege und der Drehbewegung des zu schneidenden Materials durchgefuehrt ist.

3. Schneidvorrichtung von Stangenmaterial und Rohre mit Gehaeuse und darauf montierten Rollen an denen Rollen das zu schneidend Material liegt und auf dem Vorderteil des Gehaeuses ist ein bewegbarer Scheidemechanismus mit Saege vorgesehen, **dadurchgekennzeichnet dass,** in dem laengst-orientierten Vorderteil des Gehaeuses ein Speisemechanismus (4) angeordnet ist und in dem quer-orientierten Teil des T-fotmigen Gehaeuses Dreh-Festziehmechanismus (8) angeordnet ist, der einen mit Schnecke (26) und Schneckezahnrad (27) verbundeten Motor (25) umfasst und das Schneckezahnrad (27) ist zum in Traeggehaeuse (29) und Deckel (30) gelagerten Traeger (28) befestigt, wobei in in dem Traeger ein zweiter hydraulicher Stuetzzylinder (31) vorgesehen ist, dessen Kolbenstuetzstange (32) an die eine Seite des zu schneidenden Materials (5) liegt, dessen andere Seite an unbevegbaren an einem Traeger (28) montierten Stuetz (35) liegt, beidem der Speichemechanismus (4) ist ein Schrittwerk und einen bewegbaren Schlitten (17) umfasst, die an Richtrollen (18) gestellt ist und mit dem Ende der Kolbenstange (19) einen hydraulischen Speisezylinder verbunden ist, indem an dem bewegbaren Schlitten (17) ein hydraulischer Stuetzzylinder (21) unbewegbar befestigt ist, dessen Kolbensuetzstange an die eine Seite des zu schneidenden Rohrmaterialsn (5) liegt, indem die Vorrichtung kontroliert und steuert automatisch die gleichzeitige Erfuellung der dreien Arbeitsbewegungen.

## Revendications

1. Méthode de coupe de barres et de tubes avec une scie à ruban, comprenant le positionnement, la fixation et la rotation du matériau à couper, la mise en mouvement de la scie et l'avancement de cette dernière dans le matériau à couper au cours de la coupe, **caractérisé par** ce, qu'après que le matériau à couper est fixé, la coupe est effectuée sur toute sa section par une exécution simultanée de trois mouvements de travail, notamment le mouvement linéaire propre de la scie à ruban, le mouvement en avant de la scie et le mouvement de rotation de la barre ou du tube qui est en train d'être coupé, la coupe sur toute la section de la pièce étant effectuée par une coupe sur une profondeur égale à la moitie du diamètre pour un matériau compact ou sur une profondeur égale à l'épaisseur du mur d'un tube.

2. Méthode de coupe selon la revendication 1, **caractérisé par** ce, que la coupe sur toute la section est effectuée par une variation continue de la vitesse de l'avancement de la scie dans le matériau et de la vitesse de rotation des pièces usinées.

3. Dispositif de coupe de barres et de tubes selon les revendications 1 et 2, composé d'un corps principal, la pièce à couper étant fixée sur des rouleaux d'appui, montés sur ce corps principal et d'un mécanisme mobile de coupe incorporant une scie à ruban prévu sur le devant du corps principal, **caractérisée par** ce, que dans la partie de devant, orientée dans le sens de la longueur du corps est disposé un mécanisme d'avancement /4/, tandis que dans la partie transversale du corps en forme de T est monté un dispositif de serrage et de rotation /8/, comportant un moteur /25/ couplé à une vis sans fin /26/ et une roue dentée /27/ couplée à la vis sans fin et fixée de façon immobile sur un support /28/, logé dans une coquille de roulement /29/ recouverte d'un couvercle /30/, tandis que dans le support /28/ est prévu un deuxième verin de support /31/, dont la tige du piston /32/ est posée sur l'un des deux cotés du matériau coupé /5/, l'autre coté duquel est posé sur un appui immobile /35/, monté sur le support /28/, le mécanisme d'avancement /4/ étant du type "à pas" comporte un coulisseau mobile /17/ qui est posé sur des rails de guidage cylindriques /18/ et qui est attaché sur l'extrémité de la tige du piston /19/ d'un verin d'avancement, tandis que sur le coulisseau mobile /17/ est fixé de façon immobile un verin d'appui /21/, dont la tige du piston est en contact avec l'une extrémité de la barre coupée, tandis que la scie à ruban /14/ se trouve entre deux roulettes de tension /11/ et est positionnée verticalement dans le plan du T au moyen de deux paires de roulettes /16/ montées sur une armature de roulement /3/ et que le dispositif contrôle et gère l'exécution simultanée des trois mouvements de travail.
